# EUROPEAN PATENT SPECIFICATION

(11) **EP 3 621 251 B1**
(45) Date of publication and mention of the grant of the patent: **16.11.2022**
(21) Application number: 19196061.6
(22) Date of filing: 06.09.2019
(51) Int. Cl.: H04L 45/00, H04L 45/64

(54) **PACKET PROCESSING**
PAKETVERARBEITUNG
TRAITEMENT DE PAQUETS

(30) Priority: 07.09.2018 GB 201814625
(43) Date of publication of application: 11.03.2020
(73) Proprietor: Metaswitch Networks Ltd, Enfield, Middlesex EN2 6BQ (GB)
(72) Inventor: WRIGHT, Ben Thomas, Middlesex, EN2 6BQ (GB)
(74) Representative: CMS Cameron McKenna Nabarro Olswang LLP

(56) References cited:
- US-A1- 2015 215 202
- BALAZS VARGA ET AL: "Hybrid-SDN for packet transport: The horizontal split", 2015 17TH INTERNATIONAL CONFERENCE ON TRANSPARENT OPTICAL NETWORKS (ICTON), 1 July 2015 (2015-07-01), pages 1-4, XP055332811, DOI: 10.1109/ICTON.2015.7193592 ISBN: 978-1-4673-7880-2

## Description

### BACKGROUND OF THE INVENTION

### Field of the Invention

The present disclosure relates to a packet processing node in a data network. In particular, but not exclusively, the present disclosure relates to the processing of packets in a router.

### Description of the Related Technology

In a communications network, network devices are arranged and configured to control how information is transmitted across the network. For example, in a packet-switched network, network devices such as routers, bridges, gateways, firewalls and switches may be deployed and configured to selectively forward packets across the network.

In a packet-switched network, there are typically two types of packets - data packets and control packets. Data packets relate to real content that is shared across the network and may be, for example, user generated packets intended for other users such as packets of an email message, or they may be packets received by a user such as packets of a web page sent from a web server. In nearly all communication networks, the data packets are the most common packets sent across the network, and are said to exist in the data plane of the network. Control packets are used to control the network by sharing control information between network devices. The control packets help ensure the network operates efficiently, securely, and in a scalable fashion. The control packets are typically sent less frequently than data packets, and are said to exist in the control plane of the network.

In Internet Protocol (IP) packet-based networks, the data and control IP packets are sent over the same connection between network devices. When a network device receives a stream of packets, the control packets can be separated from the normal data packets, and processed to make use of the control information contained within the control packets.

The control information contained in control packets may relate to a number of different control services used within the network. The format of the control information depends on the control service and may follow a particular protocol for that control service.

Typical control services used within a packet-based network include services for detecting failures of network devices in a network, Operations, Administration and Maintenance (OAM) functions, neighbour discovery/detection including link layer discovery, neighbour management (such as transmitting or receiving per-protocol Hellos to monitor liveness and discover neighbor capabilities), route calculation, validation and sharing, and streaming telemetry.

The size and complexity of a communication network can place varying demands on the data plane and control plane of a network device operating in the network. For wide area network (WAN) and internet-scale networks, the size and complexity of the network often requires network operators to implement high-performance network devices such as high-performance routers. However, as internet services such as cloud computing and video streaming continue to grow, there is increasing demand for network operators to scale up their network devices to cope with the growth. High performance routers are not always designed for easy upgrade, allowing for them to be efficiently scaled after purchase. Also, high performance monolithic routers often have multiple Central Processing Units (CPUs) internally and share load amongst them. Whilst this helps to manage certain data and control plane functions, the cost of buying these monolithic routing devices can be significant.

An alternative approach to the use of high-performance routers, is to deploy a relatively larger number of simpler commodity routers. Because of the increased numbers, these commodity routers are able to share and meet the bandwidth demands of the network traffic. Increased traffic or bandwidth can be managed by adding further commodity routers to the network. However, network complexity leads to greater demands on the control plane of each commodity router, and the commodity routers are often limited in their ability to handle the greater control plane demands of the network.

Network operators are able to mitigate this control plane limitation of commodity routers by disabling certain control services such as router validation or streaming telemetry. However, this disabling can impact on the performance or security of the network.

Patent publication US 2015/215202 A1 discloses an approach to enabling interoperability between legacy network systems and Software Defined Networking (SDN) systems. The approach adds functionality to an SDN system to support interworking between an SDN controlled network, and a legacy network.

The paper by Balazs Varga et al entitled "Hybrid-SDN for packet transport: The horizontal split", 2015 17TH INTERNATIONAL CONFERENCE ON TRANSPARENT OPTICAL NETWORKS (ICTON), 1 July 2015, describes an approach to splitting the control plane in a hybrid software defined network (SDN). In the paper, the authors argue to split the control plane horizontally. In this arrangement transport related functions are implemented locally on the node, while service related functions are moved to a centralized SDN controller and no control plane functions are duplicated.

### SUMMARY

The invention is defined by the independent claims.
The dependent claims define particular embodiments of the invention.
According to one aspect of the invention, there is provided a packet processing node according to independent claim 1.

According to another aspect of the invention, there is provided a data center according to claim 10.

According to another aspect of the invention, there is provided a method of processing control packets in a packet processing node according to claim 11.

According to another aspect of the invention, there is provided a non-transitory computer-readable storage medium according to claim 12.

In further aspects, the step of analyzing the control packet in the control plane function can be a step that is adaptive to the processing capacity of the packet processing node or the external processor, or other aspects of a network in which the node is operative.

The aspects of the invention described above have particular benefits in commodity network devices such as commodity router that tend to be single devices with a single simple CPU, which may not be able to adequately support high levels of control plane processing work in a performant manner.

Further features of embodiments of the present disclosure will become apparent from the following description of preferred embodiments, given by way of example only, which is made with reference to the accompanying drawings.

### BRIEF DESCRIPTION OF THE DRAWINGS

Figure 1 is a schematic diagram of a router according to an example;
Figure 2 is a block diagram of a method in a router according to an example;
Figure 3 is a simplified schematic diagram of a data center in a communications network according to an example;
Figure 4 is another schematic diagram of a data center in a communications network according to an example;
Figure 5 is a schematic diagram of a router according to an example;
Figure 6 is another block diagram of a method in a router according to an example;
Figure 7 is a schematic diagram of a router and external processor according to an example; and
Figure 8a shows a configuration table according to an example; and
Figure 8b shows another configuration table according to an example.

### DETAILED DESCRIPTION

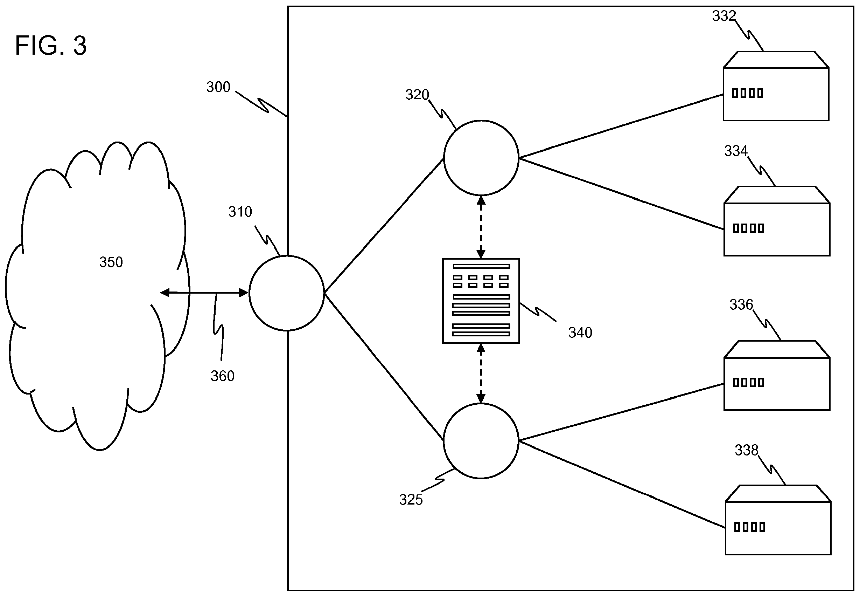

Figure 3 is a simplified schematic diagram of a data center 300 operating in a packet-based communications network. The data center 300 includes four servers 332, 334, 336, and 338 which can provide content such as video or web services to users of the communications network. The content can be provided in the form of data packets operating according to the Internet Protocol (IP). The content may be accessed by users who connect to the data center 300 via the internet 350. The servers of the data center 300 are coupled to the internet 350 via a network architecture within the data center 300.

The network architecture of the data center 300 comprises a series of interconnected network devices such as routers and switches that transport data traffic in the form of IP data packets between the servers and the outside world via the internet 350. These same routers and switches also enable the servers 332, 334, 336, and 338 to communicate and exchange data and control packets with each other. The final connection 360 between the data center 300 and the internet 350 may be via one or more internet service providers. The network devices of the data center network architecture may also comprise devices such as firewalls, VPN gateways, and monitoring systems.

The network architecture in the data center 300 of Figure 3 comprises a gateway router 310, and two intermediate routers 320 and 325. The gateway router 310 provides transport connections between the intermediate routers 320 and 325 and the internet 350, forwarding data and control packets in both directions. The intermediate routers 320 and 325 provide transport connections from the servers 332, 334, 336, and 338 to the gateway server 310 and between the servers. Data and control packets are received by the intermediate routers 320, 325 and forwarded as appropriate to other network devices in the data center network architecture.

Certain control packets are addressed to and intended for receipt by the routers 310, 320, and 325. These control packets are not forwarded by the routers but are instead processed by a control plane function of the routers.

However, as the complexity and scale of the data center network architecture and the internet domain increases so the processing demands on the control plane functions increases accordingly (for example the size of the tables that need to be maintained by the control plane elements). To alleviate the burden of the control plane function on the routers themselves and to manage the control plane functions centrally, router systems can make use of a centralized control plane function. The control plane function of the router 320, 325 is offloaded to a separate controller 340. Management and configuration of the router control plane is then the responsibility of the controller 340. In other words, the full control plane is centralized and all management interaction for the routers 320, 325 is directed through the controller 340. All configuration for the routers 320, 325 is stored within the controller and instructions are passed to the network element on what it should do (program a route, send a message etc.). Control packets received by the routers 320, 325 are forwarded to the controller for updating configuration functions such as router tables in the controller. OpenFlow is an example of a system and protocol that makes use of a centralized control plane function on a separate controller.

There are a number of drawbacks with offloading the full control plane to a centralized controller 340. Firstly, the centralized control plane introduces limitations on scale. As the number of routers in the network architecture increases so the processing burden on the controller 340 increases. Also, the controller 340 needs to be logically situated with the network architecture so that it can efficiently serve the routers, which makes deployment of additional servers a more complex task. For low latency control plane services, the additional distance and protocol overhead can make the centralized control plane function slower and less efficient than a standalone router. Secondly, the centralized control plane increases the potential failure domain of the network architecture. A failure of the centralized controller 340 or a failure of one or more of the transport connections between the controller 340 and the servers 320, 325 can destabilize the network even though there may be no failure in the servers 320, 325 themselves. Thirdly, the need for interoperability between the centralized controller and the routers means that the set of compatible routers may be restricted, which can lead to vendor lock-in and less flexibility when scaling up a network architecture.

Embodiments in this disclosure provide a router which includes a control plane function in addition to a forwarding function. Embodiments allow the control plane function to be managed within the router itself. However, embodiments also allow certain elements of the control plane function for the router to be distributed to a separate server or host which may have more available processing capacity. In embodiments, the separate server or host may be connected to the router via a network connection.

In an example, the control plane function of the router may be broken down into distinct control plane services (microservices). Some of these microservices might run on the CPU of the router in question. In an example, the router may be a commodity or whitebox router with limited processing power within the control plane function. This can occur when the router uses a lower powerful Central Processing Unit (CPU) for the control plane function. Other microservices may be run on a separate server such as an x86 server, which may have more CPU cores available and so more processing capacity. The use of commodity routers has the benefit of keeping the cost of the network architecture relatively low, and provides for a cost-effective upgrade path when needing to scale up - particularly in network architectures which are already deploying significant x86 capacity in the form of the various servers implemented as above.

With this model, routers can be managed individually, maintain their own configuration, and implement certain control plane functions themselves. In this way, even if there is failure of a server or host that is providing certain (less critical) control plane functions, or a failure of a connection to the server or host, the router may still operate and continue to manage and maintain control plane functionality.

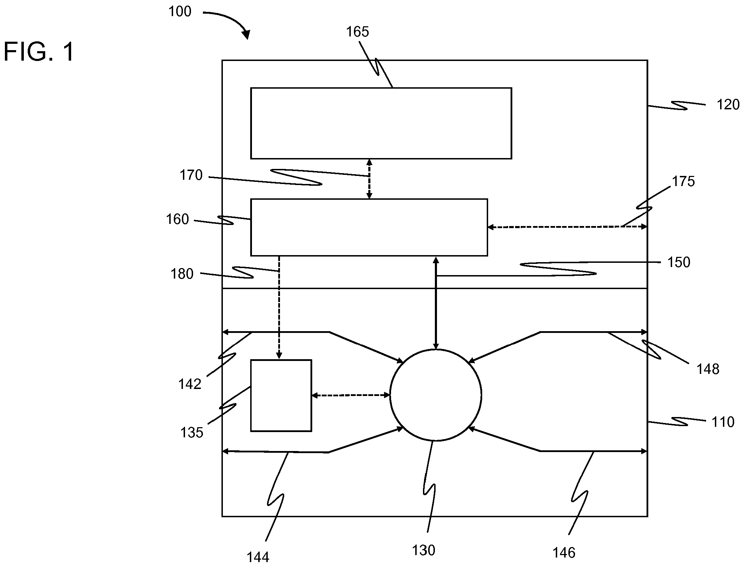

Figure 1 shows a network device in a form of a router 100 according to an embodiment. The router 100 comprises two main functions, namely a forwarding function 110, and a control plane function 120. The router 100 may be deployed as an intermediate or gateway router in the network architecture of the data center 300 of Figure 3 for example.

The forwarding function (or forwarding engine/forwarding plane) 110 operates to receive data and control packets via an input of the router 100, and to forward those data and control packets to an output of the router 100. Received control packets can also be delivered or forwarded by the forwarding function to the control plane function 120 of the router 100.

Control packets generated or handled by the control plane function 120 of the router 100 can also be passed to the forwarding function 110 for forwarding to the output of the router 100.

According to embodiments, the input of the router 100 may comprise four ports over which data and control packets can flow (also known as ingress). According to embodiments, the output of the router 100 may also comprises four ports over which data and control packets can flow (also known as egress). According to the embodiment of Figure 1, the four input ports and the four output ports may be provided by four bi-directional ports that each allow ingress (input) and egress (output) of data and control packets over the same port interface. The flow of packets in and out of the router is shown by the bidirectional flows 142, 144, 146, and 148 in Figure 1. In an alternative embodiment, the ports may be single direction, providing only input or only output interfaces, or there may be a combination of single direction and bidirectional ports. According to embodiments the number of input and output ports may vary from router to router. For example, the router 100 may have more (or less) than 4 ports, such as 12, 16, 24 or more ports.

The port interfaces may support different connection technologies such as Ethernet or optical fiber, and may include suitable Ethernet and optical fiber adaptors that can convert Ethernet and optical signals into suitable streams of packets, or convert packets into suitable Ethernet or optical signals.

In embodiments, the forwarding function may further comprise a forwarding processor 130 which is capable of forwarding packets between the flows 142, 144, 146, and 148. The forwarding processor 130 may be provided by a network processing unit (NPU) which may be provided in the form of an integrated circuit (e.g. an Application Specific Integrated Circuit - ASIC) that may be optimized or dedicated to the processing of data or control packets. The integrated circuit may be formed on a single chip package. If the router is running in a virtualized context the forwarding processor may be provided by a general-purpose CPU. A further alternative is that the forwarding processor is provided by a smart Network Interface Card (NIC).

The forwarding processor 130 may determine which ports to forward received packets to by analyzing the content of each packet. For example, the packet datagram may contain a number of distinct fields that can be analyzed to determine, for example, a destination address for the packet such as a destination IP address.

A destination address may be used by the forwarding processor 130 to lookup a next hop or route for the packet. In embodiments, the forwarding function 110 may include one or more forwarding tables 135 to lookup a suitable next hop or route for the packet. The forwarding processor 130 may be configured to interact with the forwarding table 135 to perform the lookup operation for each packet based on, for example, the destination address of the packet. Once a next hop or route has been determined for a packet then the forwarding processor 130 can decide which port to forward the packet to. The forwarding processor 130 may also modify the forwarded packets to add or modify fields contained therein based on information retrieved from the forwarding table 135. The forwarded packets may include forwarded data packets and/or forwarded control packets. The forwarding table 135 may be a Forwarding Information Base (FIB) or a MAC table, for example.

The forwarding processor 130 may analyze a received packet and determine that it is a control packet intended for the router 100. This may result from a field in the control packet specifically addressing the router using, for example, the IP address of the router 100. Alternatively, there may be a field in the control packet that indicates that the packet is a control plane protocol packet that should be processed by all routers participating in that protocol. Once it is determined that the control packet is intended for the router 100, the forwarding processor 130 forwards or delivers the control packet to the control plane function 120 of the router 100 via the logical connection 150.

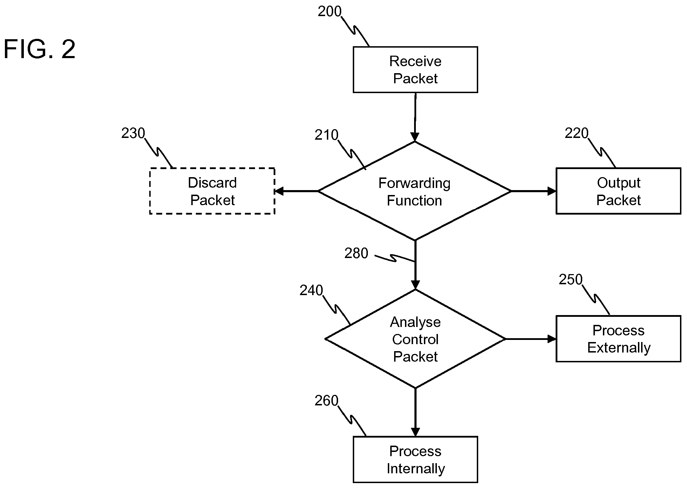

Referring also to Figure 2, there is shown a block diagram of procedures that can be performed by the forwarding function 110 and the control plane function 120 of the router 100 of Figure 1. In general, the procedure blocks 200, 210, 220, and 230 may be performed by the forwarding function 110, and the procedure blocks 240, 250, and 260 may be performed by the control plane function 120. As discussed above, the procedure block 200 relating to reception of a packet can be carried out by the forwarding function 110, which is capable of receiving packets via an input of the router 100. A main function of the forwarding function 110 is to forward packets as indicated by procedure block 210. The packets may be data packets that are forwarded to an output of the router by the forwarding function 110. The actual output of the forwarded data packet is indicated by the procedure block 220 in Figure 2 whereby the router sends the packet on the network port. The forwarding function 110 may also determine that a received packet may be discarded which is illustrated by procedure block 230 in Figure 2.

When the forwarding function 110 determines that a control packet should be passed to the control plane function 120, the procedure moves to the control plane function by delivery of the control packet from the forwarding function 110 to the control plane function 120 over the logical interface 150 as illustrated by arrow 280 in Figure 2.

Control packets received by the control plane function 120 of the router 100 are analyzed to determine whether they should be processed locally by the router 100 or externally from the router 100 as illustrated by decision block 240 in Figure 2. The analysis is based on certain rules for determining which control packets are to be processed locally or externally. These rules can be configured along with configuration of the control services in the router and the external processor (such as a server). The rules can also be changed dynamically based on the processing load or capacity or the router or the external processor. In embodiments, the step of analyzing the control packets in the control plane function can be performed by a control unit 160 of the control plane function 120 as illustrated in Figure 1. If the control unit 160 determines that the control packet should be processed internally by the router 100 then the control packet is delivered to a processing unit 165 in the control plane function 120 via the logical connection 170. This step is equivalent to the procedure block 260 in Figure 2. However, if the control unit 160 determines that the control packet should be processed externally to the router 100 then the control packet is delivered to a control plane output of the router 100 via the logical connection 175. Note: the logical connection 175 may be provided by the forwarding plane of the router 100 or may be a dedicated connection.

The decision on whether to process the control packet internally or externally may depend on a number of factors as will be discussed in more detail below. For example, the factors may depend on the contents of the control packet or on other information related to the control packet such as the port on which the control packet was received (the arrival port).

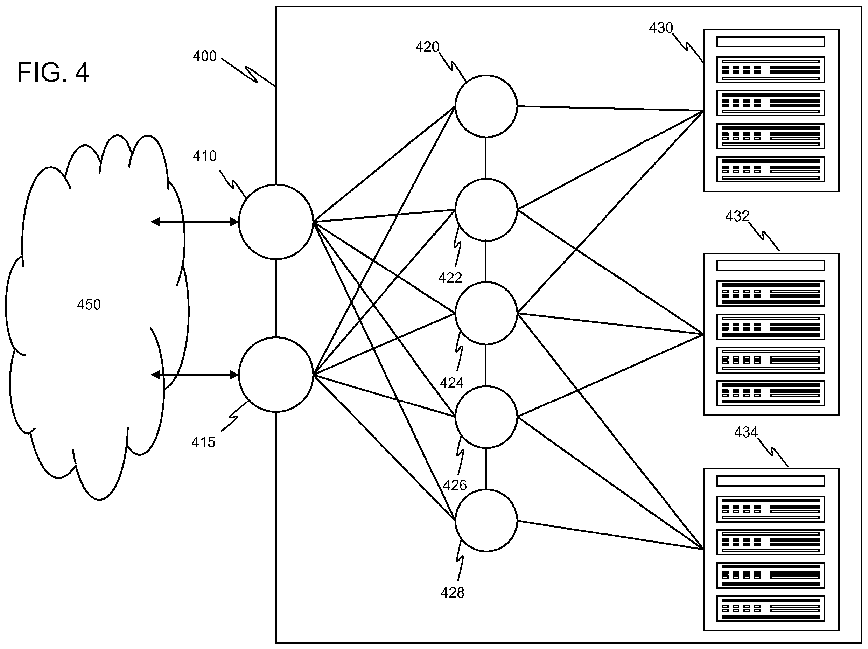

Figure 4 illustrates a data center 400 with an increased number of intermediate and gateway routers compared to Figure 3. In Figure 4, there are 5 intermediate routers 420, 422, 424, 426, and 428 which are coupled to three servers 430, 432, and 434, and two gateway routers 410, 415. The data center 400 can be connected to a larger network 450 such as a wide area network (WAN) or the internet or both. Each server is able to communicate with 3 different intermediate routers. The intermediate routers 420, 422, 424, 426, and 428 may each be provided by the router 100 illustrated in Figure 1. By increasing the number of routers, the network architecture of the data center 400 is more complex than the network architecture of the data center 300 of Figure 3. This, or increase in the complexity of network 450, may result in an increase in the control packets that need to be processed by the routers. Nevertheless, by configuring the routers to offload some of the more processor intensive control plane services to external processors, the routers are able to operate with less risk of overloading.

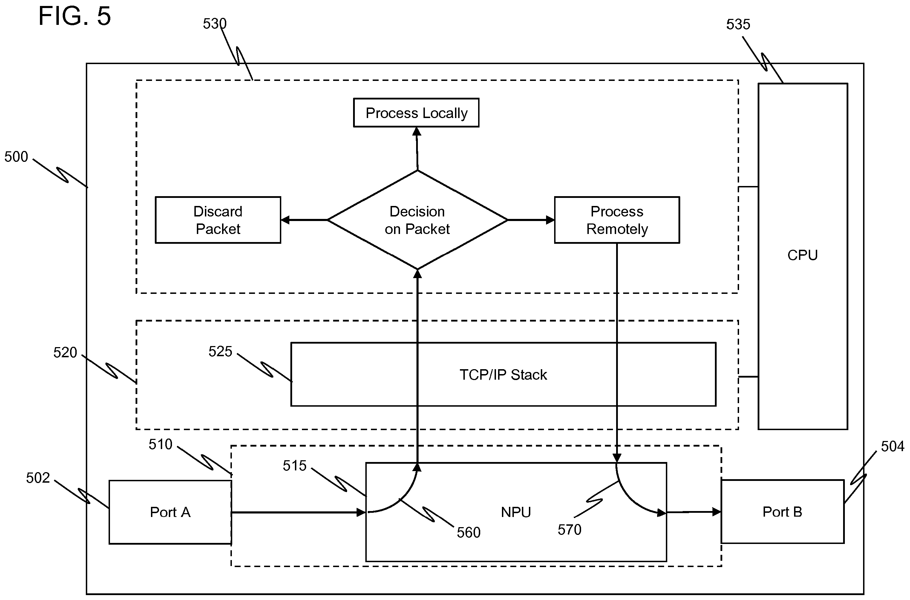

Referring now to Figure 5, there is shown another router 500 according to an embodiment. Some of the functions in the router 500 are similar to the router 100 of Figure 1. For example, the router 500 includes a forwarding function 510 to forward packets received over an input of the router 500 to an output of the router 500. The forwarding function 510 includes a Network Processing Unit 515 to perform the dedicated high-speed forwarding procedures required of the data plane in a router. The input 502 of router 500 comprises a single input port A, and the output 504 of router 500 comprises a single output port B.

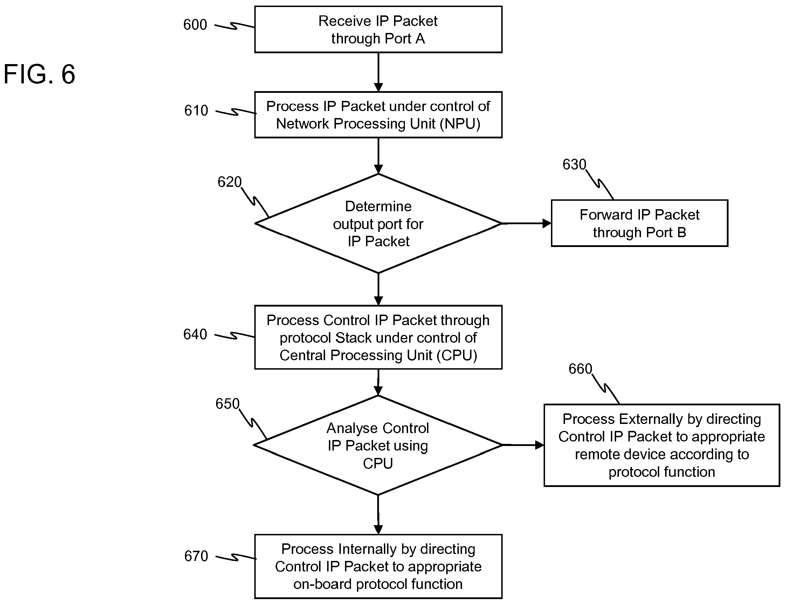

Figure 5 illustrates the flow of an example control packet as it passes through the router for processing by an external control plane processing function. The control packet in this example is an IP datagram but other formats or datagrams for the control packet are possible. Reference is also made to the flow diagram of Figure 6. At the input stage illustrated by arrow 560, the control packet is received by the input port A and is passed to NPU 515 for analysis (see also step 600 in Figure 6). The NPU determines that the control packet is intended for the router 500, and passes the control packet up to the control plane function 530 (see steps 610 and 620 in Figure 6). If the control packet is not intended for the router, then it may be forwarded by the NPU to the port B as indicated in step 630 in Figure 6.

The control plane function 530 operates as a software function under the control of a Central Processing Unit (CPU) 535. The router 500 also includes a network operating system (NOS) 520 also under the control of the CPU 535. The control plane function 530 runs on the network operating system under the control of the CPU. The determination of whether to process the control packet locally or remotely is made by a decision step in the software program running within the control plane function 530 under the control of the CPU 535, and is made by an analysis in software of the fields contained in the control packet (see step 650 in Figure 6). Because the decision is made by application software running on the network operating system, it is relatively easy to reconfigure the rules that determine which control packets are to be processed remotely and which locally.

The control packet is passed to the control plane function 530 via the network operating system (NOS) 520 (see step 640 in Figure 6). The NOS 520 may include one or more software protocol stacks to un-encapsulate the control packet so that it appears to the control plane function 530 as a high layer packet. For example, the NOS 520 may include a TCP/IP stack to unencapsulate an IP control packet so that it can be processed by a layer 3 service. Alternatively, the control packet can be provided to the control plane function 530 via the NOS 520 without passing through the protocol stack or only via part of the protocol stack.

Once a decision has been made in the control plane function 530 to process the control packet remotely, the control plane function 530 directs the packet to an output of the router 500. Specifically, the control packet is supplied with a destination address of the external processor, and is provided to the NOS 520 for output via the output port B (see step 660 in Figure 6). The NOS 520 may encapsulate the control packet as it passes down through the software protocol stack 525 before being directed to the NPU 515 for forwarding to the output port B, as illustrated by the arrow 570. The delivery of the control packet may be via tunneling protocols. The supply of the destination address of the external processor to the control packet may be indirect via the encapsulation of the control packet rather than being applied to the control packet itself. This allows the external processor to unencapsulate the original control packet for processing.

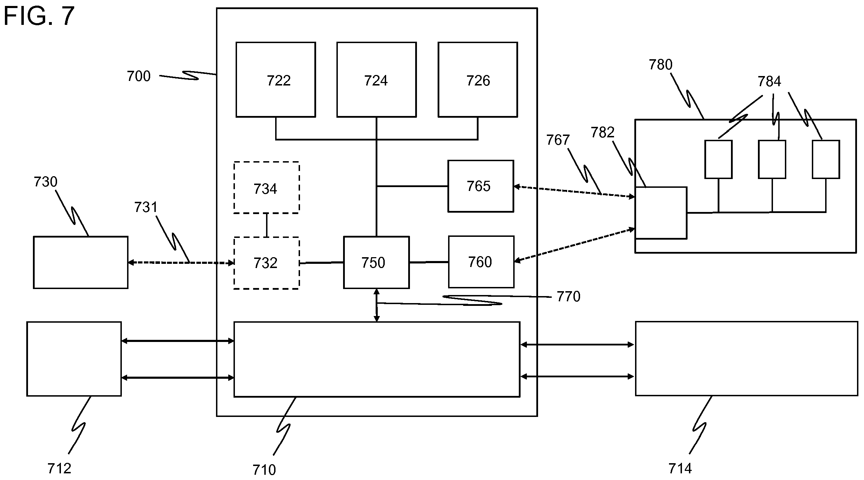

Figure 7 is a diagram of a router 700 and external processor 780 according to an embodiment. The router 700 includes a forwarding function 710 and a number of elements of a control plane function 722, 724, 726, 732, 734, 750, 760, and 765. Network elements 712 and 714 have communication links with the router via a suitable input and output of the router 700. As discussed above, control packets that are to be processed by the control plane of the router 700 are transferred from the forwarding function 710 over a logical interface 770 within the router 700. The control packet is received by a control unit 750 of the control plane function. The control unit 750 can decide to offload the control packet to the external processor 780, and in that case will pass the control packet to the control plane offload interface unit 760. The control unit 750 may also indicate to the offload interface unit 760 which particular control service the control packet should be destined for. The offload interface unit 760 will then send the control packet via the control plane offload interface to the control interface unit 782 of the external processor 780. The external processor includes one or more control service processors 784 to process control packets in accordance with different control services. The control interface unit will then direct the control packet within the external processor 780 to a particular control service processor 784.

The control unit 750 may decide for another control packet to process the control packet internally within the router 700. The router 700 includes three control service processors 722, 724, and 726 which may be configured to process control packets according to a particular control service or protocol. The router 700 may include more or less than three control service processors. If the control unit 750 decides to process the control packet internally, it will send the control packet to the appropriate control service processor 722, 724, or 726. The appropriate control service processor will then process the control packet in accordance with the control service or protocol.

In some cases, the processing of one or more control packets may result in a need to program the forwarding function 710 from the control plane of the router 700. For example, a change may have been made to a routing table in the control plane which may result in a need to update a forwarding table in the forwarding function 710. The logical interface 770 may be used to program the forwarding function from the control unit 750. Alternatively, a dedicated programming interface may be provided for programming a forwarding table as illustrated in Figure 1 by arrow 180. The control plane function may also include a programming agent 765 dedicated to programming the forwarding function. If the processing of the control packet occurred in the external processor 780 then it may be necessary to pass forwarding programming over a forwarding programming interface 767 from the control interface unit 782 of the external processor 780 to the programming agent 765.

The decision step performed in control unit 750 is important for deciding which control services are handled locally and which control services are handled remotely. The router 700 may include a management function 732 for configuring the various control services in the router 700 and the external processor 780. The management function 732 may receive configuration settings from a network administrator 730 via a suitable interface 731. The configuration settings may include one or more configuration files for setting out which control services should reside where, and how to access them.

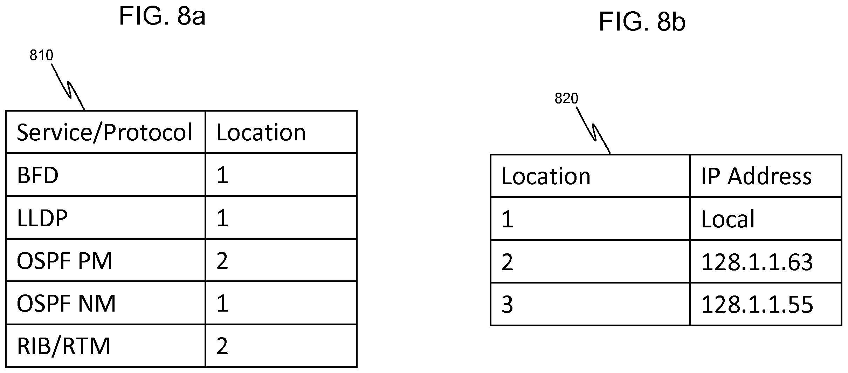

Figure 8a shows an example of a configuration file 810 that may be received by a management function 732. The configuration file 810 may be stored by the management function 732 in the configuration storage module 734. The configuration file 810 comprises a table containing 5 entries, one for each control service to be configured. For each control service/protocol, the table indicates where that service should reside. The location can be coded as a logical location indicating one or two options - local or remote; or if multiple remote locations are available indicating which remote location a given control plane service is located. In an alternative as encompassed by the wording of the claims, the location refers to an address such as an IP address where the service is to be configured, and where the control packets should be addressed. In the configuration file 810, there are two possible locations 1 and 2. Figure 8b shows a further configuration file that provides a lookup table for the location information in the configuration file 810. For each location number, there is an IP address provided.

When a new configuration file is received from the network administrator 730, the management function 732 will check to see if a control service has already been created for that particular service in the relevant location. If the control service is to be created locally, then the management function 732 creates that function in the router and couples it to the control unit 750 like control services 722, 724, and 726. If the control service is to be created remotely then the management function 732 instructs, via the offload interface unit 760 and the control plane offload interface, the control interface unit 782 of the external processor 780 to create that control service. If the control service was already running in a different location than that specified in the configuration file, it may need to be restarted to allow the system to continue functioning without loss of data, whilst the service is "moved" to run on the new location.

The benefit of this configuration approach is that the division of control services and hence processor demand can be flexibly controlled between the router and the external processor. This is especially helpful when there are variations in the available processor capacity of the router versus the external processor, or when the likely control service load is in flux or hard to predict in advance.

If the router 700 is configured to form part of a data center network architecture then there can be even further benefits from the flexible division of processing effort between the router and the external processor 780. For example, with reference to Figure 4, the router 700 could provide the intermediate router 420 of the data center 400, and the external processor 780 may be provided by the server 430. The control plane offload interface between router 420 and server 430 may beneficially be provided by the same connection that provides data packets to and from the server 430 or by a separate dedicated network. The server 430 may also have flexibility in terms of available processing power to offer the router. For example, the server 430 may comprises a collection or rack of individual server units each with its own processor. In embodiments, there may be multiple external processors 780 that may be provided by the servers 430, 432, and 434.

The decision on which control packets are processed locally, and which control packets are processed externally may depend on the characteristics of the control service. In general, processor intensive control services that do not present a high risk of causing failures are ideal for processing externally. These may include:
network route calculation services such as those that perform the Dijkstra algorithm as part of Open Shortest Path First (OSPF); or algorithms that calculate Loop Free Alternates (LFA).
telemetry service for the router; and
virtual private network services such as L2VPN, L3VPN, and EVPN.

A virtual private network service may be designed to service VPN control packets that require initial VPN processing followed by VPN network route calculation.

In general, control services that have strict latency requirements, are critical to the operation of the router, or which have relatively low processing requirements are ideal for processing internally on the router. These may include:
failure detection services;
neighbour discovery services; and
a neighbour management service.

Looking at specific examples of services:

### Failure Detection

Bidirectional Failure Detection (BFD) is a time sensitive protocol used to detect link or node or interface failures. For use cases where fast (sub-50ms) protection switching is required, failures must be detected and acted upon fast. Distributing that function to the remote processor may not be sensible - as it would add additional latency. For use cases where a large number of BFD sessions is used to monitor a large number of logical interfaces (e.g. service interfaces provided to customers) where the protection switching requirements are not as time-critical, distributing BFD function to the external processor may make much more sense - it allows far more BFD session to be run, and the additional latency may not be significant.

### Neighbour Discovery/Detection

Link Layer Discovery Protocol (LLDP) is a simple protocol used to determine information about network peers, and relaying that information to management. This is therefore an example of a protocol that is important to the manageability of the network element, and offloading this control service could make debugging harder in the case of failure of the external processor or connectivity to the external processor.

### Neighbour Management

Open Shortest Path First Neighbour Management (OSPF NM) covers the neighbour management aspects of OSPF (such as sending Hellos). This is a relatively lightweight control service and it is important it happens in a timely manner, so a microservice that implements this does not want to be contending with CPU intensive microservices which may command CPU resources that could unnecessarily delay Hellos from being originated or processing. - possibly risking timeouts and causing errors. Therefore, this service is likely to be configured locally.

### Route Calculation

OSPF PM provides a route calculation that includes an implementation of the Dijkstra algorithm which runs over the network. Other microservices do something similar such as LFA (which determines loop free alternate paths) or BGP RM which runs over the set of BGP routes for a particular address family - for example, it may run over the received IPv4 prefixes from all BGP peers (potentially measured in the millions for internet scale). These components can be CPU intensive in scaled networks. Therefore they are more suitable to distribute to a more powerful external processor.

Other protocols such as Link Aggregation Control Protocol, are likely to not be CPU intensive, so there is little benefit in offloading them.

Although the above embodiments relate primarily to routers, it is apparent that the same principles can be applied to packet processing nodes in general such as firewalls, bridges, gateways, and switches.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of embodiments of the present disclosure, which is defined in the accompanying claims.

## Claims

1. A packet processing node (500) comprising:
an input (502) to receive data and control packets;
an output (504) to send data and control packets;
a control plane function (530) to process control packets; and
a forwarding function (510) configured to receive data and control packets via the input, to forward received data packets to the output, and to forward received control packets to the control plane function;
**characterised in that** the control plane function (530) is configured to receive the control packets, and to analyze the content of control packets to:
determine which control packets are to be processed by the control plane function (530), and which control packets are to be processed by a particular control plane service external to the packet processing node; and
for control packets that are determined to be processed externally, to further provide an address of an external processor at a remote location, where said particular control plane service is executed, to process the control packets, the external control services residing at different locations of multiple remote locations.

2. The packet processing node of claim 1 wherein the analyzed content is contained in a header of the control packet.

3. The packet processing node of claim 1 wherein the analyzed content is contained in a field of the control packet.

4. The packet processing node of any preceding claim wherein the control plane function (530) is configured to direct control packets which are to be processed externally to an output of the packet processing node.

5. The packet processing node of any preceding claim wherein the control plane function (530) is configured to direct control packets which are to be processed externally to the determined external processor.

6. The packet processing node of any preceding claim wherein the determined external processor includes a service function to process the control packet according to any one or more of the following services: a network route calculation service; a telemetry service for the packet processing node; and a virtual private network service.

7. The packet processing node of any preceding claim, wherein the control plane function (530) comprises a plurality of service functions, and the control plane function is configured to analyze the content of control packets to determine a service function in the control plane function to process the control packet.

8. The packet processing node of claim 7 wherein the control plane function (530) is configured to direct the control packets to the determined service function.

9. The packet processing node of claim 7 or 8 wherein the plurality of service functions comprises one or more of the following services: a failure detection service; a neighbour discovery service; and a neighbour management service.

10. A data center (400) comprising: a packet processing node (500) according to any preceding claim and a plurality of services (430; 432; 434); wherein the control plane function (530) of the packet processing node is configured to direct the control packets to be processed externally to a server of the plurality of servers.

11. A method of processing control packets in a packet processing node (500) comprising:
receiving control packets at a control plane function (530) of a packet processing node from a forwarding unit in the packet processing node;
**characterised in that** the method further comprises analyzing the control packets to determine which control packets are to be processed internally in the packet processing node, and which control packets are to be processed by a particular control plane service external to the packet processing node;
processing control packets in the control plane function of the packet processing node if the control packets are determined to be processed internally; and
directing control packets to an output of the packet processing node if the control packets are determined to be processed externally,
wherein the step of analyzing further comprises analyzing the control packets that are determined to be processed externally to further provide an address of an external processor at a remote location where said particular control plane service is executed, to process the control packets, the external control services residing at different locations of multiple remote locations.

12. A non-transitory computer-readable storage medium comprises computer-executable instructions which, when executed by a processor, cause a computing device to perform a method for use in processing control packets in a packet processing node (500), the method comprising:
receiving control packets from a forwarding unit (510) in the packet processing node;
**characterised in that** the method further comprises analyzing the control packets to determine which control packets are to be processed internally in the packet processing node, and which control packets are to be processed by a particular control plane service external to the packet processing node;
processing control packets in the packet processing node if the control packets are determined to be processed internally; and
directing control packets to an output of the packet processing node if the control packets are determined to be processed externally,
wherein the step of analyzing further comprises analyzing the control packets that are determined to be processed externally to further provide an address of an external processor at a remote location where said particular control plane service is executed, to process the control packets, the external control services residing at different locations of multiple remote locations.

## Patentansprüche

1. Paketverarbeitungsknoten (500), umfassend:
einen Eingang (502), um Daten und Steuerpakete zu empfangen;
einen Ausgang (504), um Daten und Steuerpakete zu senden;
eine Steuerebenenfunktion (530), um Steuerpakete zu verarbeiten; und
eine Weiterleitungsfunktion (510), die dazu konfiguriert ist, Daten- und Steuerpakete über den Eingang zu empfangen, um empfangene Datenpakete an den Ausgang weiterzuleiten, und empfangene Steuerpakete an die Steuerebenenfunktion weiterzuleiten;
**dadurch gekennzeichnet, dass** die Steuerebenenfunktion (530) dazu konfiguriert ist, die Steuerpakete zu empfangen, und
den Inhalt der Steuerpakete zu analysieren zum:
Bestimmen, welche Steuerpakete von der Steuerebenenfunktion (530) verarbeitet werden sollen, und welche Steuerpakete von einem besonderen Steuerebenendienst extern von dem Paketverarbeitungsknoten verarbeitet werden sollen; und
für Steuerpakete, für die bestimmt wird, dass sie extern verarbeitet werden sollen, weiter eine Adresse eines externen Prozessors an einem entfernten Ort bereitzustellen, wo der besondere Steuerebenendienst ausgeführt wird, um die Steuerpakete zu verarbeiten, wobei der externe Steuerebenendienst an unterschiedlichen Orten mehrerer entfernter Orte liegt.

2. Paketverarbeitungsknoten nach Anspruch 1, wobei der analysierte Inhalt in einem Header des Steuerpakets enthalten ist.

3. Paketverarbeitungsknoten nach Anspruch 1, wobei der analysierte Inhalt in einem Feld des Steuerpakets enthalten ist.

4. Paketverarbeitungsknoten nach einem vorstehenden Anspruch, wobei die Steuerebenenfunktion (530) dazu konfiguriert ist, Steuerpakete, die extern verarbeitet werden sollen, zu einem Ausgang des Paketverarbeitungsknotens zu lenken.

5. Paketverarbeitungsknoten nach einem vorstehenden Anspruch, wobei die Steuerebenenfunktion (530) dazu konfiguriert ist, Steuerpakete, die extern verarbeitet werden sollen, zu dem bestimmten externen Prozessor zu lenken.

6. Paketverarbeitungsknoten nach einem vorstehenden Anspruch, wobei der bestimmte externe Prozessor eine Dienstfunktion beinhaltet, um das Steuerpaket gemäß einem oder mehreren der folgenden Dienste zu verarbeiten: einem Netzwerkroutenberechnungsdienst; einem Telemetriedienst für den Paketverarbeitungsknoten; einem virtuellen privaten Netzwerksdienst.

7. Paketverarbeitungsknoten nach einem vorstehenden Anspruch, wobei die Steuerebenenfunktion (530) eine Vielzahl von Dienstfunktionen umfasst, und die Steuerebenenfunktion dazu konfiguriert ist, den Inhalt von Steuerpaketen zu analysieren, um eine Dienstfunktion in der Steuerebenenfunktion zum Verarbeiten des Steuerpakets zu bestimmen.

8. Paketverarbeitungsknoten nach Anspruch 7, wobei die Steuerebenenfunktion (530) dazu konfiguriert ist, die Steuerpakete zu der bestimmten Dienstfunktion zu lenken.

9. Paketverarbeitungsknoten nach Anspruch 7 oder 8, wobei die Vielzahl von Dienstfunktionen einen oder mehrere der folgenden Dienste umfasst: einen Versagenserfassungsdienst; einen Nachbarentdeckungsdienst; und einen Nachbarverwaltungsdienst.

10. Rechenzentrum (400), umfassend: einen Paketverarbeitungsknoten (500) nach einem vorstehenden Anspruch und eine Vielzahl von Diensten (430; 432; 434), wobei die Steuerebenenfunktion (530) des Paketverarbeitungsknotens dazu konfiguriert ist, die Steuerpakete, die extern verarbeitet werden sollen, zu einem Server der Vielzahl von Servern zu lenken.

11. Verfahren zum Verarbeiten von Steuerpaketen in einem Paketverarbeitungsknoten (500), umfassend: Empfangen von Steuerpaketen an einer Steuerebenenfunktion (530) eines Paketverarbeitungsknotens von einer Weiterleitungseinheit in dem Paketverarbeitungsknoten;
**dadurch gekennzeichnet, dass** das Verfahren weiter das Analysieren von Steuerpaketen umfasst, um zu bestimmen, welche Steuerpakete intern in dem Paketverarbeitungsknoten verarbeitet werden sollen, und welche Steuerpakete von einem besonderen Steuerebenendienst extern von dem Paketverarbeitungsknoten verarbeitet werden sollen;
Verarbeiten von Steuerpaketen in der Steuerebenenfunktion des Paketverarbeitungsknotens, falls bestimmt wird, dass die Steuerpakete intern verarbeitet werden sollen; und
Lenken der Steuerpakete zu einem Ausgang des Paketverarbeitungsknotens, falls bestimmt wird, dass die Steuerpakete extern verarbeitet werden sollen,
wobei der Schritt des Analysierens weiter das Analysieren der Steuerpakete umfasst, von denen bestimmt wird, dass sie extern verarbeitet werden sollen, um weiter eine Adresse eines externen Prozessors an einem entfernten Ort bereitzustellen, wo der besondere Steuerebenendienst ausgeführt wird, um die Steuerpakete zu verarbeiten, wobei die externen Steuerdienste an unterschiedlichen Orten mehrerer entfernter Orte liegen.

12. Nichtflüchtiges computerlesbares Speichermedium, das computerausführbare Anweisungen umfasst, die, wenn sie von einem Prozessor ausgeführt werden, eine Rechenvorrichtung dazu veranlassen, ein Verfahren zur Verwendung beim Verarbeiten von Steuerpaketen in einem Paketverarbeitungsknoten (500) auszuführen, wobei das Verfahren umfasst:
Empfangen von Steuerpaketen von einer Weiterleitungseinheit (510) in dem Paketverarbeitungsknoten;
**dadurch gekennzeichnet, dass** das Verfahren weiter das Analysieren von Steuerpaketen umfasst, um zu bestimmen, welche Steuerpakete intern in dem Paketverarbeitungsknoten verarbeitet werden sollen, und welche Steuerpakete von einem besonderen Steuerebenendienst extern von dem Paketverarbeitungsknoten verarbeitet werden sollen;
Verarbeiten von Steuerpaketen in dem Paketverarbeitungsknoten, falls bestimmt wird, dass die Steuerpakete intern verarbeitet werden sollen; und
Lenken der Steuerpakete zu einem Ausgang des Paketverarbeitungsknotens, falls bestimmt wird, dass die Steuerpakete extern verarbeitet werden sollen,
wobei der Schritt des Analysierens weiter das Analysieren der Steuerpakete umfasst, von denen bestimmt wird, dass sie extern verarbeitet werden sollen, um weiter eine Adresse eines externen Prozessors an einem entfernten Ort bereitzustellen, wo der besondere Steuerebenendienst ausgeführt wird, um die Steuerpakete zu verarbeiten, wobei die externen Steuerdienste an unterschiedlichen Orten mehrerer entfernter Orte liegen.

## Revendications

1. Nœud de traitement de paquets (500) comprenant :
une entrée (502) pour recevoir des paquets de données et de commande ;
une sortie (504) pour envoyer des paquets de données et de commande ;
une fonction de plan de commande (530) pour traiter des paquets de commande ; et
une fonction de réacheminement (510) configurée pour recevoir des paquets de données et de commande via l'entrée, pour réacheminer des paquets de données reçus vers la sortie, et pour réacheminer des paquets de commande reçus vers la fonction de plan de commande ;
**caractérisé en ce que** la fonction de plan de commande (530) est configurée pour recevoir les paquets de commande, et
pour analyser le contenu de paquets de commande pour :
déterminer les paquets de commande qui doivent être traités par la fonction de plan de commande (530), et les paquets de commande qui doivent être traités par un service de plan de commande particulier externe au nœud de traitement de paquets ; et
pour des paquets de commande qui sont déterminés comme devant être traités de manière externe, pour fournir en outre une adresse d'un processeur externe à un emplacement distant, où ledit service de plan de commande particulier est exécuté, pour traiter les paquets de commande, les services de commande externes résidant à différents emplacements de multiples emplacements distants.

2. Nœud de traitement de paquets selon la revendication 1 dans lequel le contenu analysé est contenu dans un en-tête du paquet de commande.

3. Nœud de traitement de paquets selon la revendication 1 dans lequel le contenu analysé est contenu dans un champ du paquet de commande.

4. Nœud de traitement de paquets selon une quelconque revendication précédente dans lequel la fonction de plan de commande (530) est configurée pour diriger des paquets de commande qui doivent être traités de manière externe vers une sortie du nœud de traitement de paquets.

5. Nœud de traitement de paquets selon une quelconque revendication précédente dans lequel la fonction de plan de commande (530) est configurée pour diriger des paquets de commande qui doivent être traités de manière externe vers le processeur externe déterminé.

6. Nœud de traitement de paquets selon une quelconque revendication précédente dans lequel le processeur externe déterminé inclut une fonction de service pour traiter le paquet de commande selon l'un quelconque ou plusieurs des services suivants : un service de calcul de chemin de réseau ; un service de télémétrie pour le nœud de traitement de paquets ; et un service de réseau privé virtuel.

7. Nœud de traitement de paquets selon une quelconque revendication précédente, dans lequel la fonction de plan de commande (530) comprend une pluralité de fonctions de service, et la fonction de plan de commande est configurée pour analyser le contenu de paquets de commande pour déterminer une fonction de service dans la fonction de plan de commande pour traiter le paquet de commande.

8. Nœud de traitement de paquets selon la revendication 7 dans lequel la fonction de plan de commande (530) est configurée pour diriger les paquets de commande vers la fonction de service déterminée.

9. Nœud de traitement de paquets selon la revendication 7 ou 8 dans lequel la pluralité de fonctions de service comprend un ou plusieurs des services suivants : un service de détection de défaillances ; un service de découverte de voisins ; et un service de gestion de voisins.

10. Centre de données (400) comprenant : un nœud de traitement de paquets (500) selon une quelconque revendication précédente et une pluralité de services (430 ; 432 ; 434) ; dans lequel la fonction de plan de commande (530) du nœud de traitement de paquets est configurée pour diriger les paquets de commande devant être traités de manière externe vers un serveur de la pluralité de serveurs.

11. Procédé de traitement de paquets de commande dans un nœud de traitement de paquets (500) comprenant : la réception de paquets de commande au niveau d'une fonction de plan de commande (530) d'un nœud de traitement de paquets à partir d'une unité de réacheminement dans le nœud de traitement de paquets ;
**caractérisé en ce que** le procédé comprend en outre une analyse des paquets de commande pour déterminer les paquets de commande qui doivent être traités de manière interne dans le nœud de traitement de paquets, et les paquets de commande qui doivent être traités par un service de plan de commande particulier externe au nœud de traitement de paquets ;
un traitement de paquets de commande dans la fonction de plan de commande du nœud de traitement de paquets si les paquets de commande sont déterminés comme devant être traités de manière interne ; et
une direction de paquets de commande vers une sortie du nœud de traitement de paquets si les paquets de commande sont déterminés comme devant être traités de manière externe,
dans lequel l'étape d'analyse comprend en outre une analyse des paquets de commande qui sont déterminés comme devant être traités de manière externe pour fournir en outre une adresse d'un processeur externe à un emplacement distant où ledit service de plan de commande particulier est exécuté, pour traiter les paquets de commande, les services de commande externes résidant à différents emplacements de multiples emplacements distants.

12. Procédé de stockage non transitoire lisible par ordinateur comprenant des instructions exécutables par ordinateur qui, lorsqu'elles sont exécutées par un processeur, amènent un dispositif informatique à réaliser un procédé pour une utilisation dans un traitement de paquets de commande dans un nœud de traitement de paquets (500), le procédé comprenant :
une réception de paquets de commande à partir d'une unité de réacheminement (510) dans le nœud de traitement de paquets ;
**caractérisé en ce que** le procédé comprend en outre une analyse des paquets de commande pour déterminer les paquets de commande qui doivent être traités de manière interne dans le nœud de traitement de paquets, et les paquets de commande qui doivent être traités par un service de plan de commande particulier externe au nœud de traitement de paquets ;
un traitement de paquets de commande dans le nœud de traitement de paquets si les paquets de commande sont déterminés comme devant être traités de manière interne ; et
une direction de paquets de commande vers une sortie du nœud de traitement de paquets si les paquets de commande sont déterminés comme devant être traités de manière externe,
dans lequel l'étape d'analyse comprend en outre une analyse des paquets de commande qui sont déterminés comme devant être traités de manière externe pour fournir en outre une adresse d'un processeur externe à un emplacement distant où ledit service de plan de commande particulier est exécuté, pour traiter les paquets de commande, les services de commande externes résidant à différents emplacements de multiples emplacements distants.
